# EUROPÄISCHE PATENTANMELDUNG

(11) **EP 1 126 498 A2**
(43) Veröffentlichungstag der Anmeldung: **22.08.2001**
(21) Anmeldenummer: 01101769.6
(22) Anmeldetag: 26.01.2001
(51) Int. Cl.: H01J 9/26

(54) **Verfahren und Vorrichtung zur Wärmebehandlung von Bildröhren**

(30) Priorität: 28.01.2000 DE 10003664
(71) Anmelder: ELINO INDUSTRIE-OFENBAU CARL HANF GmbH & CO., 52355 Düren (DE)
(72) Erfinder: Heimbach, Franz, 52351 Düren (DE); Johnen, Dieter, 52355 Düren (DE); Huppertz, Walter, 52156 Monschau-Konzen (DE); Lopez, Francisco, 52388 Nörvenich (DE); Hofmann, J.P., 5672 TG Nuenen (NL)
(74) Vertreter: Patentanwälte Hauck, Graalfs, Wehnert, Döring, Siemons

(57) **Zusammenfassung**

Es werden ein Verfahren und eine Vorrichtung zur Wärmebehandlung von Bildröhren zur Aushärtung der Klebeverbindung zwischen Bildschirm und Konus beschrieben. Die Bildröhre wird über eine Behandlungsstrecke gefördert, wobei sie während des Durchlaufens der Behandlungsstrecke mit einem Heizmedium beaufschlagt wird. Ferner wird während des Durchlaufens der Behandlungsstrecke der Innenraum der Bildröhre mit einem Spülgas beaufschlagt. Auf diese Weise läßt sich ein hoher Durchsatz erzielen, ohne daß die Bildröhre durch die Wärmebehandlung beeinträchtigt wird.

## Beschreibung

Die vorliegende Erfindung betrifft ein Verfahren und eine Vorrichtung zur Wärmebehandlung von Bildröhren zur Aushärtung der Klebeverbindung zwischen Bildschirm und Konus.

Bildröhren werden aus Spezialglas hergestellt, wobei Schirm und Konus getrennt voneinander hergestellt und miteinander verklebt werden. Beim Verkleben werden der Schirm und der am rückwärtigen Ende offene Konus an der Verbindungsstelle mit dem entsprechenden Kleber, beispielsweise einer Glasfritte, versehen und aneinander gesetzt. In diesem Zustand findet dann eine Wärmebehandlung der Bildröhre statt, um die Klebeverbindung zwischen Schirm und Konus auszuhärten. Eine derartige Wärmebehandlung wird in Wärmebehandlungskammern, Öfen etc. durchgeführt.

Diese Behandlung muß so durchgeführt werden, daß ein gleichmäßiges Aushärten der sich um den Umfang der Bildröhre herum erstreckenden Klebeverbindung erreicht wird, ohne daß unzulässige Spannungen in den Glasteilen verursacht werden. Da der Bildschirm mit eingesetztem Innenleben (u.a. Lochmaske) verklebt wird, muß ferner darauf geachtet werden, daß das Innenleben nicht negativ beeinträchtigt wird, z.B. durch Verunreinigungen. Derartige Verunreinigungen können beispielsweise aus der Behandlungsatmosphäre mit dem zum Aushärten verwendeten Heizmedium (Heizgas) resultieren. Ferner können sich durch den Aushärtungsvorgang aus dem zum Verbinden verwendeten Kleber Gase bilden; die sich ebenfalls nachteilig auf die Innenbauteile der Bildröhre auswirken.

Der Erfindung liegt die Aufgabe zugrunde, ein Verfahren und eine Vorrichtung der angegebenen Art zu schaffen, mit dem bzw. der sich der Aushärtungsprozeß auf besonders wirtschaftliche und bildröhrenschonende Weise durchführen läßt.

Diese Aufgabe wird bei einem Verfahren zur Wärmebehandlung von Bildröhren zur Aushärtung der Klebeverbindung zwischen Bildschirm und Konus durch die folgenden Schritte gelöst:
a) Fördern der Bildröhre über eine Behandlungsstrecke;
b) Beaufschlagen der Bildröhre mit einem Heizmedium, während die Bildröhre die Behandlungsstrecke durchläuft; und
c) Beaufschlagen des Innenraumes der Bildröhre mit einem Spülgas, während die Bildröhre die Behandlungsstrecke durchläuft.

Bei dem erfindungsgemäßen Verfahren wird die Bildröhre gleichzeitig innen und außen mit einem Medium beaufschlagt, nämlich dem Heizmedium, insbesondere Heizgas, und dem Spülgas, wobei auch dieses erwärmt sein kann. Temperaturspannungen in der Bildröhre werden weitgehend ausgeschaltet. Durch die Begasung des Innenraumes der Bildröhre werden Gase, die während des Klebeprozesses entstehen, gezielt abgeführt, und das Eindringen von Fremdgasen und Schmutzpartikeln in die Bildröhre verhindert. Der Spülvorgang erfolgt so, daß das Spülgas gezielt durch die Öffnung im Konus in den Innenraum der Bildröhre eingeführt wird, und zwar über eine entsprechende Begasungsleitung, während das auszuspülende Gas durch die gleiche Öffnung außerhalb der Begasungsleitung aus dem Innenraum entfernt wird. Das Heizmedium, mit dem die Bildröhre von außen beaufschlagt wird, kann in seiner Temperatur entsprechend variiert werden, so daß sich eine Aufheiz-, Halte- und Kühlphase ergeben. Auch bei dem Spülgas können Temperatur und Zusammensetzung variiert werden, um Prozeß- und Produktoptimierungen zu erzielen.

Als Spülgase finden beispielsweise Luft und N₂ Verwendung.

Durch die vorzugsweise kontinuierliche Begasung des Innenraumes der Bildröhre wird verhindert, daß die die Bildröhre umgebende Gasatmosphäre in den Innenraum der Bildröhre eindringt. Ferner werden die durch die Klebeverbindung im Innenraum entstehenden Gase abgeführt. Dadurch, daß die äußere Gasatmosphäre nicht in den Innenraum der Bildröhre eindringen kann, kann das Heizmedium auch ein aus einer direkten Brennstoffbeheizung gewonnenes Rauchgas sein, d.h. es muß nicht unbedingt eine elektrische oder indirekte Brennstoffbeheizung durchgeführt werden.

Erfindungsgemäß kann somit eine kontrollierte Innenatmosphäre der Bildröhre während des Klebens aufrechterthalten werden. Pro Bildröhre sind einstellbare und kontrollierbare Spülgasmengen möglich, wobei das Spülgas während des Prozesses beliebig geändert werden kann. Das Spülgas wird mit der erforderlichen Prozeßtemperatur in die Bildröhre eingeleitet, und die Abgase aus der Bildröhre können gezielt abgeführt werden.

Ferner kann der Wärmeübergang sektionell, z.B. in Abhängigkeit von der Glasmasse, angepaßt werden.

Die Bildröhre wird vorzugsweise in horizontaler oder geneigter Stellung gefördert, wobei der Neigungswinkel der Bildröhre beliebig verändert werden kann. "Horizontale Stellung" heißt hier, daß sich der Bildschirm oben und der Konus unten befinden.

Eine besonders bevorzugte Variante des Verfahrens zeichnet sich dadurch aus, daß die Bildröhre während der Behandlung um ihre Achse gedreht wird. Diese Vorgehensweise hat den Vorteil, daß die Bildröhre sowohl von außen mit dem Heizmedium als auch von innen mit dem Spülgas gleichmäßig beaufschlagt wird, wobei es an sich ausreichend ist, die Bildröhre konstant an einer Stelle mit dem Heizmedium zu beaufschlagen. Durch die Drehung erfolgt dann eine relativ gleichmäßige Beaufschlagung über den gesamten Umfang der Bildröhre.

Die Bildröhre wird vorzugsweise in Querrichtung mit dem Heizmedium beaufschlagt, und zwar vorteilhafterweise einseitig. Dies schließt nicht aus, daß die Bildröhre auch in Querrichtung beidseitig mit dem Heizmedium beaufschlagt werden kann. Das Spülgas wird, wenn die Bildröhre im wesentlichen horizontal oder geneigt gefördert wird, von unten in den Innenraum derselben eingeblasen.

Die Bildröhre wird zweckmäßigerweise hängend oder stehend über die Behandlungsstrecke gefördert. Hierdurch ist der Raum seitlich von der Bildröhre nicht von irgendwelchen Fördermitteln besetzt, so daß sich eine günstige Beaufschlagung bzw. Umwälzung des Heizmediums erzielen läßt. Darüber hinaus können hierdurch mehrere Bildröhren nebeneinander mit relativ engen Abständen über die Behandlungsstrecke gefördert werden.

Gemäß einem weiteren Aspekt schlägt die Erfindung vor, mehrere Bildröhren übereinander über die Behandlungsstrecke zu fördern. Hierdurch wird eine besonders gute Raumausnutzung erzielt, wenn sich die Behandlungsstrecke in einer Kammer, einem Ofen etc. befindet. Vorzugsweise erfolgt auch die Zuführung des Spülgases von oben oder unten, desgleichen die des Heizmediums. Wenn mehrere Bildröhren übereinander über die Behandlungsstrecke gefördert werden, wird jede Bildröhre einzeln über eine zugehörige Leitung mit Spülgas beaufschlagt. Ferner wird vorzugsweise jede Bildröhre einzeln mit dem Heizmedium beaufschlagt. Zur Gasbeaufschlagung können hierbei sämtliche der vorstehend genannten Variationsmöglichkeiten Anwendung finden.

Die Erfindung betrifft ferner eine Vorrichtung zur Durchführung des Verfahrens nach einem der vorangehenden Ansprüche, die dadurch gekennzeichnet ist, daß sie als Durchlaufofen ausgebildet ist.

Mit der als Durchlaufofen ausgebildeten Vorrichtung läßt sich das vorstehend beschriebene Verfahren mit den dadurch erzielbaren Vorteilen verwirklichen. Die im Durchlaufofen angeordnete Behandlungsstrecke können mehrere Bildröhren, die hintereinander mit Abstand voneinander angeordnet sind, kontinuierlich und taktweise durchlaufen. Mit einer derartigen Vorrichtung läßt sich somit eine hohe Ausbeute in bezug auf das Endprodukt erzielen.

Der Durchlaufofen weist vorzugsweise eine sich durch ihn erstreckende schleifenförmige Förderbahn mit außerhalb angeordneter Belade- und Entladestation auf, entlang der eine Fördereinrichtung umläuft. Die Fördereinrichtung besitzt vorzugsweise Fördergestelle zur Aufnahme von mindestens einer Bildröhre in übereinander angeordneter Lage, die stehend oder hängend entlang der Förderbahn durch den Durchlaufofen bewegt werden. Der Durchsatz der Vorrichtung kann somit noch dadurch erhöht werden, daß mehrere Bildröhren übereinander in einem Fördergestell angeordnet werden. Dabei sind mehrere Fördergestelle hintereinander und im Abstand voneinander angeordnet.

Die Fördergestelle werden stehend oder hängend durch den Durchlaufofen bewegt, wobei bei einer besonders bevorzugten Ausführungsform die Fördergestelle hängend angeordnet sind, sich daher die Förderbahn, entlang der sich die Fördergestelle bewegen, oberhalb und außerhalb der eigentlichen Ofenkammer befindet. Dabei ist jedes Gestell zweckmäßigerweise an einer Stange angeordnet, die sich durch einen Schlitz an der Oberseite des Ofens nach außen bis zur Förderbahn erstreckt und dort beispielsweise einen Kopf aufweist, der über Rollen auf der Förderbahn (Förderschienen) gelagert ist. Die Stange ist vorzugsweise hohl ausgebildet, damit die Spülgasleitungen durch die Stange in den Ofen eingeführt werden können.

Wie bereits erwähnt, sind die zu behandelnden Bildröhren vorzugsweise drehbar angeordnet, was durch drehbare Anordnung der Gestelle realisert wird. Dabei befindet sich vorzugsweise außerhalb der eigentlichen Ofenkammer an jeder Stange, die sich von jedem Gestell nach oben durch die Oberseite des Ofens erstreckt, ein Drehantrieb, der die Stange und damit das Gestell in Drehungen versetzen kann.

Der Durchlaufofen weist zweckmäßigerweise einseitig oder beidseitig der Förderbahn durch den Durchlaufofen Heizmediumbeaufschlagungseinrichtungen auf. Bei diesen Beaufschlagungseinrichtungen kann es sich um Düsen handeln, die in der Ofenwandung angeordnet sind. Das Heizmedium strömt über die Düsen und gibt die Wärme an die Bildröhre ab. Dabei ist jeweils eine Beaufschlagungseinrichtung einer Bildröhre zugeordnet, so daß mehrere Beaufschlagungseinrichtungen übereinander angeordnet sind, wenn mehrere Bildröhren übereinander durch den Ofen gefördert werden. Es versteht sich, daß diese Düsen in bezug auf ihre Lage, ihren Austrittsquerschnitt und ihren Stellwinkel einstellbar sind.

Zweckmäßigerweise ist der Durchlaufofen so ausgebildet, daß er mehrere Förderstrecken nebeneinander aufweist. Diese Ausführungsform wird erst dadurch möglich, daß die Bildröhren in einer übereinander angeordneten Lage durch den Durchlaufofen gefördert werden. Vorzugsweise weist der Durchlaufofen zwei nebeneinander angeordnete Förderstrecken auf, zwischen denen eine Beheizungseinrichtung angeordnet ist. Bei dieser speziellen Ausführungsform wird das Heizmedium zwischen den beiden Förderstrecken erhitzt und nach unten geleitet, wobei entsprechende Leitbleche als Führung angeordnet sein können. Im unteren Bereich wird das Heizmedium nach beiden Seiten umgelenkt und von dort über Ventilatoren in Kanälen im Ofen wieder nach oben geführt, wobei es durch in der Kanalwandung (Ofenwandung) angeordnete Düsenpakete etwa horizontal austreten und die Bildröhren beaufschlagen kann. Auf diese Weise wird eine kontinuierliche Umwälzung des Heizmediums im Durchlaufofen erreicht.

Wie bereits erwähnt, werden auch die Spülgasleitungen von oben oder von unten in den Durchlaufofen eingeführt. Bei der hängenden Anordnung der Fördergestelle erfolgt die Einführung der Spülgasleitungen von oben in den Ofen, vorzugsweise durch die ein Gestell tragende Stange. Wenn im Gestell beispielsweise vier Bildröhren übereinander angeordnet sind, sind vier Spülgasleitungen vorgesehen, die zu der jeweiligen Bildröhre führen und sich durch das Konusloch bis in deren Innenraum erstrecken. Die Spülgasleitungen verlaufen zweckmäßigerweise seitlich von den Bildröhren nach unten. Die Spülgasleitungen münden zweckmäßigerweise außerhalb und oberhalb des Durchlaufofens in einem Verteiler, der von einer oder mehreren Gasleitungen beaufschlagt wird. Es versteht sich, daß die Spülgasleitungen so angeordnet und geführt sind, daß hierdurch die Bewegung des Gestelles entlang der Förderbahn sowie der Rotationsvorgang des Gestelles nicht behindert wird.

Die Anordnung der einzelnen Bildröhren in den Gestellen erfolgt vorzugsweise über sogenannte "Klebelehren", die eine horizontale oder geneigte Anordnung der Bildröhren ermöglichen. Die Klebelehren bewirken vorzugsweise entweder eine hängende oder eine stehende Anordnung der Bildröhren.

Die Erfindung wird nachfolgend anhand eines Ausführungsbeispieles in Verbindung mit der Zeichnung im einzelnen beschrieben. Es zeigen:
- Figur 1: einen Vertikalschnitt durch einen Durchlaufofen; und
- Figur 2: eine schematische Draufsicht auf den Durchlaufen der Figur 1.

Der in den Figuren dargestellte Durchlaufofen 1 dient zur Ausführung des erfindungsgemäßen Verfahrens. Der Ofen hat eine längliche Form und ist im Querschnitt etwa rechteckförmig ausgebildet. Über dem eigentlichen Behandlungsraum befindet sich ein Raum zur Aufnahme der Fördereinrichtungen, Gaszuführleitungen etc.

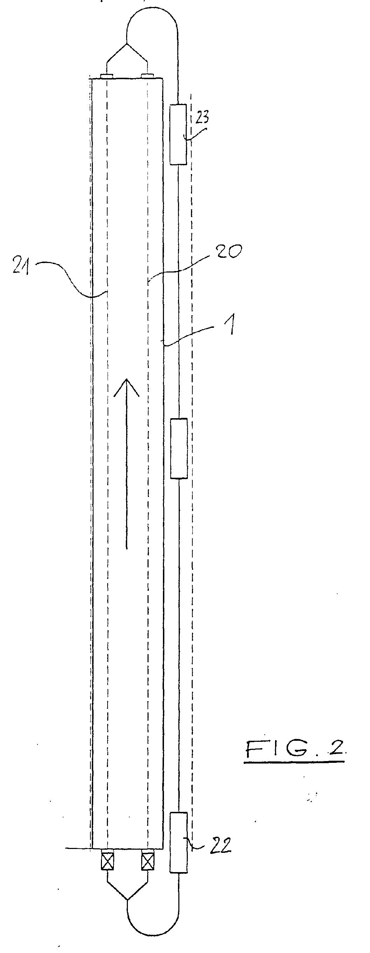

Durch den Durchlaufofen 1 erstrecken sich ein oder mehrere (zwei) Förderstrecken 20, 21 (in Figur 2 gezeigt), die jeweils eine Behandlungsstrecke zur Durchführung des erfindungsgemäßen Verfahrens bilden. Die Förderstrecken 20, 21 sind außerhalb des Durchlaufofens zusammengeführt, wobei sich die Förderstrecke von einem Ofenende schleifenförmig zum anderen Ofenende erstreckt. Es ist somit eine geschlossene Förderschleife gebildet, entlang der die zu behandelnden Produkte (Bildröhren) kontinuierlich oder taktweise geführt werden, wobei sich außerhalb des Durchlaufofens eine Beladestation 22 und eine Entladestation 23 befinden.

Der dargestellte Durchlaufofen dient zur Wärmebehandlung von Bildröhren, um die Klebeverbindung zwischen Bildschirm und Konus auszuhärten. Die Bildröhren werden dabei außerhalb des Ofens an der entsprechenden Verbindungsstelle mit einem Kleber versehen. Bildröhre und Konus werden dann aneinandergesetzt und an der Beladestation der Fördereinrichtung des Durchlaufofens zugeführt.

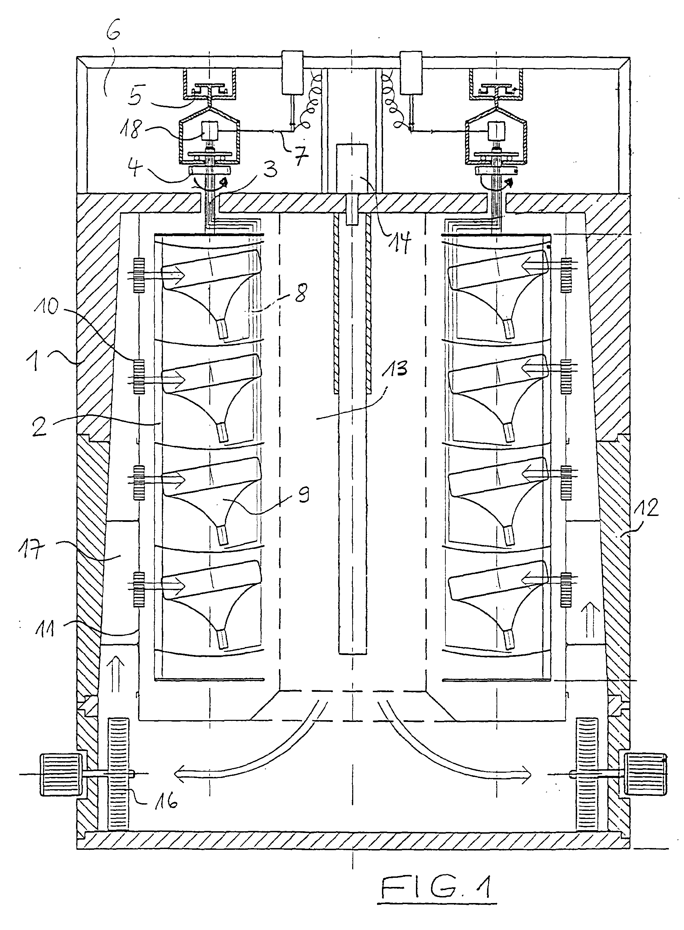

Wesentlich ist, daß als Fördereinrichtung eine Vielzahl von Fördergestellen 2 Verwendung findet, die in Vertikalrichtung in eine Reihe von einzelnen Abteilen unterteilt sind. Bei der dargestellten Ausführungsform sind vier Abteile übereinander angeordnet, wie man Figur 1 entnehmen kann. Jeweils in ein Abteil wird eine zu behandelnde Bildröhre mit Hilfe einer zugehörigen Klebelehre (Fixiereinrichtung) in der Beladestation eingebracht. Figur 1 zeigt, daß in einem Gestell vier Bildröhren 9 übereinander angeordnet sind. Die Bildröhren nehmen dabei eine leicht geneigte Lage ein.

Jedes Fördergestell 2 wird hängend durch den Durchlaufofen bewegt. Vom oberen Ende des Fördergestelles erstreckt sich eine Stange 3 nach oben durch einen Förderschlitz in der Behandlungskammer nach oben. Über einen schematisch angedeuteten Drehantrieb 4 wird die Stange 3 in Drehungen versetzt. Das Gestell 2 kann somit während seiner Bewegung durch den Durchlaufofen um seine eigene Achse gedreht werden.

Oberhalb des Drehantriebes 4 erweitert sich die Stange zu einem Kopf, dessen obere Verlängerung mit Rollen 5 an oder in einer entsprechenden Laufschiene gelagert ist. Der Antrieb für die Bewegung der einzelnen Gestelle entlang der Förderstrecke ist nicht dargestellt.

Während ihrer Bewegung durch den Durchlaufofen werden die einzelnen Bildröhren 9 wärmebehandelt. Hierzu werden sie mit einem Heizmedium beaufschlagt und in ihrem Inneren mit einem Spülgas versehen. Bei der dargestellten Ausführungsform befinden sich zwei Förderbahnen im Durchlaufofen nebeneinander, wobei der zwischen beiden Bahnen befindliche Raum zur Zuführung des Heizmediums genutzt wird. Die mittels einer Beheizungseinrichtung 14 erwärmten Heizgase gelangen in die eigentliche Behandlungskammer und werden über einen Kanal 13 nach unten geführt. Sie können im unteren Bereich seitlich aus dem Kanal 13 austreten. In den unteren Ecken des Durchlaufofens angeordnete Ventilatoren 16 saugen das eingeführte Heizmedium an und drücken dieses in seitliche Kanäle 17, in denen das Heizmedium nach oben geführt wird. Die Kanäle sind über eine Wand von der eigentlichen Behandlungskammer getrennt. In dieser Wand befinden sich Düsen 10, über die das Heizgas aus dem Kanal 17 auf die zu behandelnden Bildröhren 9 geführt wird. Da sich die Bildröhren während der Behandlung drehen, wird sichergestellt, daß der gesamte Umfang der Verbindungsstelle zwischen Bildschirm und Konus mit dem Heizmedium beaufschlagt wird.

Ferner wird der Innenraum der Bildröhren 9 während der Beaufschlagung derselben mit dem Heizmedium mit einem Spülgas beaufschlagt. Das Spülgas wird ebenfalls vom oberen Ende des Ofens in diesen eingeführt. Dabei erstreckt sich eine Gaszuführleitung 7 in den Kopf der Stange 3 bis zu einem Verteiler 18, von dem aus Spülgasleitungen durch die Stange 3 sich in den Ofen erstrecken. Dabei ist jeder Bildröhre eine einzelne Spülgasleitung 8 zugeordnet. Die Leitungen treten aus der Stange aus und verlaufen seitlich am Gestell nach unten und erstrecken sich dann durch das Loch am unteren Ende des Konus in den Innenraum der Bildröhren. Durch das Spülgas wird das im Innenraum der Bildröhren befindliche Gas entfernt, das durch das Konusloch austritt und dann im Innenraum des Ofens umgewälzt und abgeführt wird.

Es ist noch darauf hinzuweisen, daß der Durchlaufofen 1 mit Servicetüren 12 versehen ist.

Die Funktionsweise des Ofens wurde bereits vorstehend teilweise angedeutet. In der Beladestation 22 werden die einzelnen Fördergestelle 2 mit den zu behandelnden Bildröhren 9 versehen, die über die entsprechenden Klebelehren (in Figur 1 nicht gezeigt) in den einzelnen Abteilen der Gestelle angeordnet werden. Die Fördergestelle werden dann auf den zwei unterschiedlichen und nebeneinander angeordneten Förderstrecken 20 und 21 durch den Durchlaufofen geführt, aus dem sie am gegenüberliegenden Ende austreten. Dort werden die beiden Förderstrecken 20, 21 wieder zusammengeführt. Die Gestelle gelangen dann zur Entladestation 21, in der die behandelten Bildröhren aus den Gestellen entnommen werden.

Die Behandlung läuft so ab, daß die Bildröhren während ihrer Förderung durch den Durchlaufofen über die seitlich angeordneten Düsen 10 mit dem Heizmedium beaufschlagt werden. Da sich die Gestelle zusammen mit den Bildröhren drehen, wird für eine gleichmäßige Beaufschlagung gesorgt. Des weiteren wird in die Bildröhren während der Behandlung das zugeführte Spülgas eingeführt. Auf diese Weise kann die Gasatmosphäre im Ofen nicht in die Bildröhren eindringen, und die sich beim Aushärten der Klebeverbindung entwickelten Gase und eventuellen Fremdstoffe werden aus dem Innenraum der Bildröhre abgeführt.

Bei dem hier beschriebenen Ofen können mehrere Bildröhren übereinander in einem einzigen Gestell durch den Ofen geführt werden. Mehrere Gestelle können mit bestimmten Abständen kontinuierlich oder taktweise entlang der Förderbahn durch den Ofen bewegt werden. Auf diese Weise läßt sich ein sehr hoher Durchsatz erzielen.

## Patentansprüche

1. Verfahren zur Wärmebehandlung von Bildröhren zur Aushärtung der Klebeverbindung zwischen Bildschirm und Konus mit den folgenden Schritten:
a) Fördern der Bildröhre über eine Behandlungsstrecke;
b) Beaufschlagen der Bildröhre mit einem Heizmedium, während die Bildröhre die Behandlungsstrecke durchläuft; und
c) Beaufschlagen des Innenraumes der Bildröhre mit einem Spülgas, während die Bildröhre die Behandlungsstrecke durchläuft.

2. Verfahren nach Anspruch 1, dadurch gekennzeichnet, daß die Bildröhre in horizontaler oder geneigter Stellung gefördert wird.

3. Verfahren nach Anspruch 1 oder 2, dadurch gekennzeichnet, daß die Bildröhre während der Behandlung gedreht wird.

4. Verfahren nach einem der vorangehenden Ansprüche, dadurch gekennzeichnet, daß die Bildröhre in Querrichtung mit dem Heizmedium umströmt wird.

5. Verfahren nach Anspruch 4, dadurch gekennzeichnet, daß die Bildröhre einseitig mit dem Heizmedium beaufschlagt wird.

6. Verfahren nach einem der vorangehenden Ansprüche, dadurch gekennzeichnet, daß die Lage der Bildröhre vor der Wärmebehandlung einstellbar ist.

7. Verfahren nach einem der vorangehenden Ansprüche, dadurch gekennzeichnet, daß die Bildröhre hängend gefördert wird.

8. Verfahren nach einem der Ansprüche 1 bis 6, dadurch gekennzeichnet, daß die Bildröhre stehend gefördert wird.

9. Verfahren nach einem der Ansprüche 3 bis 8, dadurch gekennzeichnet, daß die Drehgeschwindigkeit variierbar ist.

10. Verfahren nach einem der vorangehenden Ansprüche, dadurch gekennzeichnet, daß die Beaufschlagung des Innenraumes der Bildröhre mit dem Spülgas während der Aufheiz-, Halte- und Kühlphase erfolgt.

11. Verfahren nach einem der vorangehenden Ansprüche, dadurch gekennzeichnet, daß über die Behandlungsstrecke unterschiedliche Spülgase verwendet werden.

12. Verfahren nach einem der vorangehenden Ansprüche, dadurch gekennzeichnet, daß mehrere Bildröhren übereinander durch die Behandlungsstrecke gefördert werden.

13. Vorrichtung zur Durchführung des Verfahrens nach einem der vorangehenden Ansprüche, dadurch gekennzeichnet, daß sie als Durchlaufofen (1) ausgebildet ist.

14. Vorrichtung nach Anspruch 13, dadurch gekennzeichnet, daß der Durchlaufofen (1) eine sich durch ihn erstreckende Förderbahn (20, 21) mit außerhalb angeordneter Belade- und Entladestation (22, 23) aufweist, entlang der eine Fördereinrichtung umläuft.

15. Vorrichtung nach Anspruch 14, dadurch gekennzeichnet, daß die Fördereinrichtung Fördergestelle (2) zur Aufnahme von mindestens einer Bildröhre (9) in übereinander angeordneter Lage aufweist, die stehend oder hängend entlang der Förderbahn durch den Durchlaufofen (1) bewegt werden.

16. Vorrichtung nach Anspruch 15, dadurch gekennzeichnet, daß die Bildröhren (9) mittels Klebelehren an/in den Gestellen (2) plaziert sind.

17. Vorrichtung nach Anspruch 15 oder 16, dadurch gekennzeichnet, daß die Gestelle (2) drehbar sind.

18. Vorrichtung nach einem der Ansprüche 13 bis 17, dadurch gekennzeichnet, daß der Durchlaufofen (1) einseitig oder beidseitig der Förderbahn durch den Durchlaufofen (1) Heizmediumbeaufschlagungseinrichtungen (Düsen 10) aufweist.

19. Vorrichtung nach einem der Ansprüche 13 bis 18, dadurch gekennzeichnet, daß er mehrere Förderstrecken (20, 21) nebeneinander aufweist.

20. Vorrichtung nach Anspruch 19, dadurch gekennzeichnet, daß er zwei nebeneinander angeordnete Förderstrecken (20, 21) aufweist, denen jeweils Heizmediumbeaufschlagungseinrichtungen (15) zugeordnet sind.

21. Vorrichtung nach Anspruch 18, dadurch gekennzeichnet, daß die Lage der Heizmediumbeaufschlagungseinrichtungen (Düsen 10) verstellbar ist.

22. Vorrichtung nach einem der Ansprüche 13 bis 21, dadurch gekennzeichnet, daß jeder über die Behandlungsstrecke des Durchlaufofens (1) geführten Bildröhre (9) eine Spülgasleitung (8) mit oder ohne Gasvorwärmung zugeordnet ist, die über die Konusöffnung in das Innere der Bildröhre (9) geführt ist.

23. Vorrichtung nach Anspruch 22, dadurch gekennzeichnet, daß die Spülgasleitungen (8) von oben oder unten in den Durchlaufofen (1) eingeführt und den Bildröhren (9) zugeführt sind.
